# EUROPÄISCHE PATENTSCHRIFT

(11) **EP 2 604 666 B1**
(45) Veröffentlichungstag und Bekanntmachung des Hinweises auf die Patenterteilung: **15.02.2017**
(21) Anmeldenummer: 12196646.9
(22) Anmeldetag: 12.12.2012
(51) Int. Cl.: C09J 5/00, C09J 7/02, C09D 183/04, B31D 1/02

(54) **Verfahren zur Herstellung eines mehrlagigen Klebeprodukts**
Method for producing a multi-layer adhesive product
Procédé de fabrication d'un produit adhésif multicouche

(30) Priorität: 13.12.2011 DE 102011120830
(43) Veröffentlichungstag der Anmeldung: 19.06.2013
(73) Patentinhaber: Baumer hhs GmbH, 47829 Krefeld (DE)
(72) Erfinder: Istemaas, Wilhelm, 46419 Isselburg (DE); Walther, Thomas, 47803 Krefeld (DE)
(74) Vertreter: Strauss, Steffen

(56) Entgegenhaltungen:
- WO-A1-01/70418
- US-A1- 2008 299 346

## Beschreibung

Die Erfindung betrifft ein Verfahren zur Herstellung eines mehrlagigen Klebeprodukts mit einer Klebeschicht. gemäß Anspruch 1 Eine Vielfalt an Klebelagenmaterialien wird gegenwärtig bei der Herstellung von Klebeetiketten, Klebebändern und medizinischen Produkten verwendet. Klebelagenmaterialien können durch die Bereitstellung einer Klebeschicht auf einem Lagensubstrat, wie Papier, Kunststofffilm oder einer Metallfolie gebildet werden. Als Klebeschicht kommt meist eine Haftklebstoffschicht zum Einsatz. Die Haftklebstoffschicht kann ohne notwendige zusätzliche Aktivierung an einen Gegenstand gebunden werden.

Die klebrige Oberfläche eines Klebelagenmaterials, Klebepflasters, Etiketts oder eines anderen Klebeproduktes wird häufig mit einer abziehbaren oder abtrennbaren Schutzlage, die als Trennträger, Trennlage, Trennschicht oder Trennunterlage bekannt ist, versehen. Der Träger schützt vorübergehend die klebrige Oberfläche des Klebeproduktes vor Staub, Feuchtigkeit und andere Kontaminationsarten, bis das Etikett oder Klebeband verwendungsbereit ist. Im Allgemeinen wird der abziehbare Trennträger direkt vor der Verwendung des Klebeproduktes von der Klebstoffoberfläche abgezogen.

Der Trennträger darf sich nicht von der Klebeschicht lösen, muss aber jedoch mit einer relativ geringen Klebekraft ablösbar sein. Der Träger darf auch keine Abnahme der Klebekraft verursachen und sollte nach dem Abziehen klebstofffrei sein.

Im Wesentlichen werden für die Beschichtung der Trennträger siliconhaltige Beschichtungen angewendet. Die siliconhaltigen Beschichtungen können, wie die DE 2 231 279 offenbart, als lösungsmittelhaltige Mittel aufgetragen werden. Die Patentschrift DD 299 522 schlägt als Trennschicht härtbare Siliconbeschichtungen vor. Die EP 0 819 298 B1 beschreibt die Herstellung von Trennträgern mit UV - härtbaren Siliconschichten. In dem Verfahren gemäß der EP 1 102 822 B1 werden heißschmelzbare Trennmaterialschichten vorgeschlagen.

Die siliconhaltigen Beschichtungen werden in den meisten Fällen mit einem Rakel- oder Walzenwerk flächig auf das Trennträgerbasismaterial aufgetragen. Die DE 2 231 279 beschreibt die Applikation einer Trennbeschichtung mit einem Buchdruckwerk. Die EP 1 102 822 B1 beschreibt ferner die Applikation mit einem Direkttiefdruck- oder Offsetdruckwerk. Jedes Druckverfahren eröffnet grundsätzlich die Möglichkeit, Trennschichten auch partiell auf das Trennträgerbasismaterial aufzutragen.

Das Aufbringen von Trennschichten mit unterschiedlicher Klebekraft ist unter anderem in der DE 10 2009 045 812 A1 offenbart. Das Produkt weist eine erste und eine zweite haftklebrige Oberfläche auf, wobei die erste haftklebrige Oberfläche mit einer ersten Trennschicht eingedeckt ist und die zweite haftklebrige Fläche mit einer zweiten Trennschicht eingedeckt ist, wobei die Abzugskraft der ersten Trennschicht von der ersten haftklebrigen Fläche geringer ist als die Abzugskraft der zweiten Trennschicht von der zweiten haftklebrigen Fläche. Produkte mit unterschiedlichen Hafteigenschaften sind aus dieser Schrift folglich bekannt. Es handelt sich dabei aber um doppelseitige Klebebänder, die beidseitig mit einem Trennträger beschichtet sind. Typischerweise wird der erste Trennträger von dem Klebeband getrennt, dieses dann mit dem Zielsubstrat verbunden dann der andere, gegenüberliegende Trennträger abgezogen, so dass ein weiteres Substrat mit der Klebeschicht verbunden wird. Bei dieser Anwendung werden zwar unterschiedliche Trenneigenschaften der Trennschichten auf dem Trennträger offenbart, diese befinden sich auf zwei unterschiedlichen Seiten des Trennträgers.

Die Schrift WO 2005/034065 offenbart ein Etikett mit unterschiedlich haftenden Bereichen. Diese unterschiedlich haftenden Bereiche werden durch einen partiellen Klebstoffauftrag im Siebdruck erzielt. Die Anwendung von Trennschichten ist dabei nicht vorgesehen.

Die EP 1 171 286 B1, die EP 1 225 553 B1 zeigen eine Anwendung, bei der unterschiedlich haftende Bereiche erforderlich sind. Dieses Patent offenbart eine Methode zur Herstellung von so genannten Booklet-Etiketten. Booklet - Etiketten sind Etiketten, die Faltprodukte umfassen, die zum Beispiel vertiefende Informationen zu dem Produkt enthalten, auf dem das Etikett anhaftet. Die steigenden Informationsanforderungen bei Pharmazeutika oder Chemikalien lassen sich nicht mehr mit einem simplen, planen Etikett abdecken, deswegen müssen Faltprodukte an einem Etikett befestigt werden. Um diese lesen zu können, müssen diese aufgeschlagen werden können. Andererseits müssen die Booklet - Etiketten während des Durchlaufs durch die gesamte Logistikkette fest mit dem Produkt verbunden sein. In der Schrift EP 1 171 286 B1 wird dies gelöst, indem unterschiedliche Klebstoffe mit unterschiedlicher Klebkraft aufgetragen werden. Die Bereiche, die von dem Leser geöffnet werden müssen weisen Klebstoffzonen mit geringer Klebkraft auf, während die Bereiche, die fest mit dem Produkt verbunden bleiben müssen, Zonen hoher Klebekraft aufweisen. Diese Schrift bietet aber keinen Hinweis auf einen partiellen Auftrag von Trennschichten.

Die DE 10 2009 035 931 A1 offenbart ein Verfahren, bei dem eine spaltfähige Schicht auf ein Trägermaterial partiell aufgetragen wird. Wird das Etikett teilabgelöst, so spaltet sich die spaltfähige Schicht und das Etikett lässt sich in dem Bereich der spaltfähigen Schicht leicht ablösen, während es in den Bereichen ohne spaltbare Schicht fest mit dem Trägermaterial verbunden bleibt. Der Nachteil dieses Verfahrens ist, dass es sich um ein destruktives Verfahren handelt. Das Etikett lässt sich nach dem Ablösen nicht mehr mit dem Träger verbinden. Ferner offenbart diese Schrift die teilweise, partielle Inaktivierung der Haftkleberschicht, um Zonen mit einer geringen Haftkraft zu schaffen. Dies kann zum Beispiel durch eine partielle Bepuderung oder durch eine partielle Wärmeeinwirkung geschehen.

In der US 4,621,442 ist ein mehrlagiges Klebeetikett beschrieben. Das mehrlagige Etikett ist an einem vorderen Klebebogen festgeklebt, der Teile aufweist, die sich über entgegengesetzte Ränder des mehrlagigen Etiketts hinaus erstrecken. Das mehrlagige Etikett und der vordere Klebebogen sind auf einer Lage Kleber angeordnet, die eine abziehbare Unterlage aufweist, sodass, wenn das mehrlagige Klebeetikett an einem Artikel angebracht wird, die beiden Teile des vorderen Bogens, die sich über das mehrlagige Etikett hinaus erstrecken, und die Rückseite des mehrlagigen Etiketts an dem Artikel haften.

Die EP 232054 beschreibt einen Klebeunterlagebogen, der lösbar an einem Abziehbogen haftet, sowie ein Etikett, das am Klebeunterlagebogen mittels eines selbstklebenden durchsichtigen Bogens befestigt ist, der das Etikett überzieht und an der Vorderseite des Etiketts und um drei Seiten des Etiketts herum am Unterlagebogen haftet. Entlang der vierten Seite des Etiketts fallen die Ränder des Etiketts, des durchsichtigen Bogens und des Unterlagebogens zusammen, so dass das Etikett in einer Tasche eingeschlossen ist, die von dem Klebeunterlagebogen und dem durchsichtigen Bogen gemeinsam gebildet wird. Das Etikett weist einen vorderen, einen hinteren und einen dazwischen angeordneten Bogen auf, die entlang von Faltlinien miteinander verbunden sind.

Alle diese Booklet - Anwendungen verlangen partiell haftende Bereiche, nehmen jedoch keinen Bezug auf eine partielle Beschichtung von Trennmitteln zum Erzeugen von Zonen unterschiedlicher Klebekraft mittels eines partiellen Trennmittelauftrags.

Es werden Vorrichtungen zum Auftragen von fließfähigem Material auf ein bewegbares Substrat, insbesondere zum intermittierenden Auftragen von flüssigem Klebstoff beispielsweise eingesetzt, um folienförmige Substrate mit flüssigem Klebstoff, etwa Heißschmelzkleber, flächig zu beschichten. Eine solche Vorrichtung ist unter anderem in der EP 0 329 829 offenbart. Solche Auftragsvorrichtungen sind oft versehen mit mindestens einem Zuführkanal zum Zuführen von fließfähigem Material, mindestens einer Düsenanordnung mit mindestens einem mit dem Zuführkanal verbundenen und in eine Austrittsöffnung zum Abgeben von Material mündenden Austrittskanal sowie mit einer Ventilanordnung zum Unterbrechen des Materialflusses, die einen bewegbaren Ventilkörper sowie einen Ventilsitz aufweist, wobei der Ventilkörper mit dem Ventilsitz derart zusammenwirkt, dass der Materialfluss durch Bewegung des Ventilkörpers in eine Schließstellung unterbrochen und in eine Öffnungsstellung freigegeben wird. Häufig wird ein so genannter intermittierender Auftrag vorgenommen, d. h. dass Intervalle, in denen der Ventilkörper in der Öffnungsstellung ist und Material auf das Substrat aufgetragen wird, sich mit Intervallen abwechseln, in denen der Ventilkörper in der Schließstellung ist, so dass der Materialauftrag unterbrochen ist. Beim intermittierenden Auftrag werden häufig sehr kurze Intervalle verwirklicht, um Auftragszonen mit geringen Abständen zueinander realisieren zu können. Der Materialfluss muss bei manchen Anwendungen bis zu 1000 Mal pro Minute unterbrochen und freigegeben werden. Es ist nicht bekannt, dass solche Flächendüsen mit elektro-magnetischen oder elektro- pneumatischen Ventilen für die Applikation von Trennschichten eingesetzt wurden.

Haftklebstoffe oder haftklebrige Klebstoffe werden häufig in der Etikettenindustrie und verwandten Bereichen angewandt. Sie bleiben dauerhaft klebrig und bestehen aus permanent klebfähigen organischen Produkten, die für Ihre Anwendung in der Regel ein Trägermaterial benötigen. Haftklebstoffe sind dadurch charakterisiert, dass sie bei Raumtemperatur ohne eine zusätzliche Aktivierung durch ein Andrücken an eine Oberfläche zu einer Benetzung führen, die ausreichende Haftungskräfte ergibt.

Aus der DE 10 2005 061 767 A1 ist eine Abdeckung zur Verminderung der Luftblasenbildung bei Applikation klebender Erzeugnisse bekannt. Es ist offenbart, nicht klebende Strukturen auf eine dehäsive Schicht aufzudrucken.

Die FR 2 570 985 A1 offenbart, eine die Klebkraft herabsetzende Schicht auf einen Teil einer Klebstoffschicht aufzulaminieren, um ein Aufklebematerial, beispielsweise ein Etikett, zu schaffen, welches nach einem einmaligen Aufkleben nicht beschädigungsfrei abgezogen und erneut aufgeklebt werden kann.

Die US 2008/299346 A1 zeigt ein Verfahren zur Herstellung eines Klebeartikels, bei dem nicht-adhäsive Tropfen, etwa durch Sprühen, in zufälliger Verteilung auf eine Klebeschicht des Klebeartikels aufgebracht werden.

Die WO 01/70418 A1 zeigt ein vollflächiges Beschichtungsverfahren einer Trägerschicht mit einer antiadhäsiven Schicht.

Nachteilig bei bekannten Verfahren zur Herstellung eines mehrlagigen Klebeproduktes ist, dass sie aufwändig und/oder in ihrer Anwendung eingeschränkt sind.

Die Erfindung hat es sich zur Aufgabe gemacht, ein Verfahren zu schaffen, das zumindest hinsichtlich eines der genannten Nachteile verbessert ist. Die Aufgabe wird gelöst durch das Verfahren nach Anspruch 1. Sinnvolle Weiterbildungen ergeben sich aus den Unteransprüchen.

Die Aufgabe der Erfindung ist es insbesondere auch, ein Verfahren zur Herstellung eines mehrlagigen Produktes zu etablieren, bei dem mindestens zwei Lagen des Produktes insbesondere haftklebend miteinander verbunden sind und insbesondere die Anhaftung (»Klebrigkeit«) zwischen den verbundenen Lagen partiell differiert und die unterschiedliche Anhaftung verglichen mit den bekannten Verfahren einfacher erzeugt wird.

Bei dem erfindungsgemäßen Verfahren zur Herstellung eines mehrlagigen Klebeprodukts mit einer Klebeschicht, wird ein Beschichtungsmittel mit antiadhäsiven Eigenschaften durch eine Düsenanordnung aufgetragen.

Das Beschichtungsmittel mit antiadhäsiven Eigenschaften wird bevorzugt in einem Bereich des Klebeprodukts aufgetragen, der zumindest vorübergehend bestimmungsgemäß mit der Klebeschicht in Kontakt gerät bzw. verbunden wird. Es wird weiter bevorzugt in flüssiger Form aufgetragen. Unter "Düsenanordnung" ist keine von dem Substrat entfernte Anordnung zu verstehen, die das Beschichtungsmittel aufsprüht, sondern eine solche, die sich in unmittelbarer Nähe zu oder in Kontakt mit einem zu beschichtenden Substrat befindet, insbesondere, um so einen Auftrag mit einem scharf begrenzten Rand zu gewährleisten.

Das Beschichtungsmittel mit antiadhäsiven Eigenschaften ist bevorzugt durch UV - Strahlen härtbar.

Bevorzugt handelt es sich bei dem Verfahren um ein Verfahren zur Herstellung eines Haftklebeproduktes, die Klebeschicht ist bevorzugt also eine Haftklebeschicht.

Die Klebeschicht ist bevorzugt eine Klebstoffschicht.

Bevorzugt werden das Beschichtungsmittel mit antiadhäsiven Eigenschaften und die Klebeschicht so ausgewählt und/oder aufeinander abgestimmt und/oder aufgetragen, dass sich eine Wiederverschließbarkeit ergibt. Die Klebeschicht kann bevorzugt also nach einem ersten in Kontakt bringen mit dem Beschichtungsmittel mit antiadhäsiven Eigenschaften von diesem abgelöst und danach erneut auf diesem oder einer anderen Schicht aufgeklebt werden. Bzw. kann die Schicht, auf der die Klebeschicht aufgebracht ist, nach einem ersten Aufkleben auf die das Beschichtungsmittel mit antiadhäsiven Eigenschaften tragende Schicht von dieser abgelöst werden und danach erneut auf diese oder eine andere Schicht aufgeklebt werden. Hierdurch eröffnen sich eine Vielzahl von Anwendungsmöglichkeiten.

In einer Ausführungsform wird das Beschichtungsmittel mit antiadhäsiven Eigenschaften auf einem druckempfindlichen, insbesondere nicht-walzbaren Substrat aufgetragen. Hierbei kommen die Vorzüge des erfindungsgemäßen Verfahrens besonders zur Geltung. Mit einem nicht-walzbaren Substrat wird im Rahmen dieser Druckschrift insbesondere ein Substrat bezeichnet, welches sich, ohne beschädigt zu werden, nicht durch Walzen, insbesondere Walzenspalte, transportieren lässt. Als Beispiel sei eine Pralinenverpackung genannt, also eine unmittelbar die Pralinen umgebende dreidimensionale Struktur, meist aus Kunststoff.

In einer Ausführungsform wird das Beschichtungsmittel mit antiadhäsiven Eigenschaften zur Herstellung eines aufgespendeten Labels oder Booklets in dem Bereich aufgetragen, der an dem Booklet zu öffnen sein soll. Dadurch kann das Booklet leicht geöffnet und bevorzugt nach dem Lesen wieder verklebt werden. Das Booklet muss nicht etwa komplett entfernt werden. Es ist daher für den Nutzer leicht handhabbar und flattert nach dem Lesen nicht herum. Denkbare Anwendungsgebiete sind Food, Non Food. Pharma, Baumarkt, Farben, Lacke und dergleichen sowie Marketing und Produktinformation.

In einer Ausführungsform wird das Beschichtungsmittel mit antiadhäsiven Eigenschaften zur Herstellung eines aufgespendeten Gewinnspiels auf Produkten und Werbematerial auf den Bereich des Produktes aufgetragen, an dem das Gewinnspiel zu öffnen sein soll. Hierdurch kann das Gewinnspiel leicht geöffnet werden.

Bevorzugt wird das Beschichtungsmittel mit antiadhäsiven Eigenschaften auf eine Fläche aufgetragen, die eine endgültige spätere bestimmungsgemäße Klebefläche ist. Mit endgültiger späterer bestimmungsgemäßer Klebefläche ist insbesondere eine Fläche gemeint, die an der bestimmungsgemäß zuletzt vorgenommenen Klebung beteiligt ist.

In einer anderen Ausführungsform wird das Beschichtungsmittel mit antiadhäsiven Eigenschaften auf einer Fläche aufgetragen, die keine endgültige spätere bestimmungsgemäße Klebefläche ist. Das Beschichtungsmittel mit antiadhäsiven Eigenschaften wird in dieser Ausführungsform also anders ausgedrückt in einem Bereich des Klebeprodukts aufgetragen, der nur vorübergehend bestimmungsgemäß mit der Klebeschicht verbunden wird. Der Endnutzer kann die Klebeschicht beispielsweise anschließend mit der endgültigen späteren bestimmungsgemäßen Klebefläche verbinden.

In einer weiteren Ausführungsform wird das Beschichtungsmittel mit antiadhäsiven Eigenschaften zur Herstellung eines Briefumschlags aufgetragen. Hierdurch kann auf einen separaten Trennstreifen, etwa aus Silikon, verzichtet werden, wodurch Material gespart, der Herstellungsprozess vereinfacht wird und kein Abfall beim Nutzer entsteht. Das Beschichtungsmittel mit antiadhäsiven Eigenschaften wird bevorzugt als Streifen aufgebracht und die Klebeschicht liegt, bevorzugt angeordnet auf einer Klebelasche, nach einer Falzung der Klebelasche auf dem Beschichtungsmittel mit antiadhäsiven Eigenschaften bzw. auf der mit diesem beschichteten Schicht. Der Anwender muss nur den Falz am oberen Ende des Umschlags öffnen. Denkbare Anwendungsgebiete sind Privathaushalte und Versandzentren.

Bei dem Verfahren zur Herstellung eines Briefumschlags sind mehrere Variationen denkbar. In der Ausführungsform, in der das Beschichtungsmittel mit antiadhäsiven Eigenschaften auf eine Fläche aufgetragen wird, die eine endgültige spätere bestimmungsgemäße Klebefläche ist, kann sich ein zerstörungsfrei zu öffnender und wiederverschließbarer Briefumschlag ergeben, wie er etwa für Büchersendungen gewünscht ist, der ohne Blechklammern oder dergleichen auskommt. Dieser Briefumschlag eignet sich beispielsweise auch für Briefsendungen, die dem Adressaten die Möglichkeit einer direkten Rückantwort bieten, so genannten "Mailings mit Rückantwort". Der Umschlag kann von dem Nutzer direkt wieder verschlossen werden. Die schnelle Rückantwortmöglichkeit vergrößert die Responserate, etwa beim Marketing. Das Beilegen eines separaten Rückumschlages kann entfallen.

Es ist auch denkbar, dass das Beschichtungsmittel mit antiadhäsiven Eigenschaften auf dem Briefumschlag auf einer Fläche aufgetragen wird, die keine endgültige spätere bestimmungsgemäße Klebefläche ist. Beispielsweise auf eine Fläche im Inneren des Umschlages, die von einer Klebelasche erreicht werden kann. Die vorzugsweise auf einer Klebelasche angeordnete Klebeschicht wird dann bevorzugt bei der Herstellung des Klebeprodukts mit dieser Schicht in Kontakt gebracht, haftet weiter bevorzugt leicht an dieser an und ist dadurch etwa vor Verunreinigung geschützt. Der Nutzer kann dann die Klebelasche mit der Klebeschicht leicht von dieser Fläche lösen und auf die nicht mit einem Beschichtungsmittel mit antiadhäsiven Eigenschaften ausgestattete endgültige bestimmungsgemäße Klebefläche etwa auf der Außenseite des Umschlages drücken. Hierdurch kann eine belastbare und nicht ohne weiteres zerstörungsfrei zu lösende Klebung geschaffen werden.

In einer anderen Ausführungsform wird das Beschichtungsmittel mit antiadhäsiven Eigenschaften zur Herstellung einer Lebensmitteltüte aufgetragen, um eine wiederverschließbare Verpackung zu erhalten. Bei der Lebensmitteltüte kann es sich um eine Mehl- oder Cerealien- oder Getreidetüte handeln. Derartige Tüten, die durch aus dem Stand der Technik bekannte Verfahren hergestellt sind, lassen sich meist nur schwer wieder verschließen, meist ist keine Möglichkeit dafür vorgesehen. Das Beschichtungsmittel mit antiadhäsiven Eigenschaften wird bevorzugt auf der Front des Produktes aufgebracht und dient weiter bevorzugt als Haftfläche für die Klebeschicht. Das Beschichtungsmittel mit antiadhäsiven Eigenschaften wird in dieser Ausführungsform des Verfahrens also bevorzugt auf eine Fläche der Lebensmitteltüte aufgetragen, die eine endgültige spätere bestimmungsgemäße Klebefläche ist. Die Klebeschicht wird bevorzugt auf eine Verschlusslasche aufgetragen. Der Vorteil verglichen mit Lebensmitteltüten, die durch aus dem Stand der Technik bekannte Verfahren hergestellt sind, besteht darin, dass eine einfache Handhabung durch den Kunden gegeben ist und etwa das Mehl nicht auf dem Beschichtungsmittel mit antiadhäsiven Eigenschaften haftet und die Verklebung unbrauchbar macht. Darüber hinaus ergibt sich ein Schutz des Produkts, Komfort und Sauberkeit im Haushalt. Anstelle zur Herstellung von Lebensmitteltüten kann das Beschichtungsmittel mit antiadhäsiven Eigenschaften auch zur Herstellung von Gipstüten für den Baumarkt aufgetragen werden.

Bei der Lebensmitteltüte kann es sich auch um verschließbare Bäckertüten handeln. Bäckertüten, durch aus dem Stand der Technik bekannte Verfahren hergestellt sind, können oft nicht sicher verschlossen werden und sind oben offen. Mangelnde Sauberkeit und Hygiene für den Kunden können die Konsequenz sein, sowie, sofern die Tüten in einem Discounter oder Supermarkt verwendet werden, eine Untermischungsmöglichkeit von anderen Produkten. Das Beschichtungsmittel mit antiadhäsiven Eigenschaften kann zur Bildung einer Haftfläche für die Klebeschicht, insbesondere einer endgültigen späteren bestimmungsgemäßen Klebefläche, aufgebracht werden. Das Beschichtungsmittel mit antiadhäsiven Eigenschaften kann auch auf eine Bäckertüte für den Einzelhandel oder eine Tüte etwa für Metzgereien aufgetragen werden.

In einer weiteren Ausführungsform wird das Beschichtungsmittel mit antiadhäsiven Eigenschaften zur Herstellung eines pharmazeutischen Produkts aufgetragen, etwa eines Infusionsbeutels. Bei pharmazeutischen Produkten, die durch aus dem Stand der Technik bekannte Verfahren hergestellt sind, sind die Etiketten oft nicht ablösbar. Zur Übertragung in eine Patientendatei muss daher oft abgeschrieben werden. Bevorzugt wird das Beschichtungsmittel mit antiadhäsiven Eigenschaften derart aufgetragen, dass sich Etiketten ergeben, die zu einem Teil fest auf dem pharmazeutischen Produkt kleben und zu einem anderen Teil auf dem Beschichtungsmittel mit antiadhäsiven Eigenschaften haften. Weiter bevorzugt werden die Etiketten mit einer Perforation ausgestattet, so dass der nur leicht haftende Teil nach dem Ablösen von einem Nutzer abgerissen werden kann, um daraufhin - bevorzugt unter erneuter Nutzung der bereits auf dem Etikett angeordneten Klebeschicht - etwa auf eine Patientenmappe geklebt werden zu können. Das Beschichtungsmittel mit antiadhäsiven Eigenschaften wird in dieser Ausführungsform also auf einer Fläche aufgetragen, die keine endgültige spätere bestimmungsgemäße Klebefläche ist. Durch die durch dieses Verfahren hergestellten pharmazeutischen Produkte kann die Sicherheit im Patientenumgang erhöht werden. Mögliche Einsatzgebiete sind Krankenhäuser, Arztpraxen und Rettungsdienste.

Das Beschichtungsmittel mit antiadhäsiven Eigenschaften kann auch zur Herstellung einer wiederverschließbaren Faltschachtel aufgetragen werden. Faltschachteln, die durch aus dem Stand der Technik bekannte Verfahren hergestellt sind, lassen sich auch bei geeigneter Konstruktion häufig nicht gut verschließen. Ein Verschluss, der, wie bevorzugt, auf einem Beschichtungsmittel mit antiadhäsiven Eigenschaften aufgeklebt wird (bzw. auf einer damit beschichteten Schicht), ist konstruktiv einfach herzustellen und anzuwenden. Die hierdurch geschaffene Faltschachtel, etwa zur Anwendung im Lebensmittelbereich, ist einfach anwendbar, auch für ältere Menschen. Produkte sind darin gut geschützt.

Das Beschichtungsmittel mit antiadhäsiven Eigenschaften kann auch zur Herstellung von neuartigen Faltschachteln aufgetragen werden. Hierbei kann es sich beispielsweise um Verpackungen handeln, die durch die Möglichkeit, sie zu öffnen und wiederzuverschließen neue Produktmarketingmöglichkeiten bieten. Beispielsweise kann das Produkt durch das Öffnen einer Lasche angesehen werden und die Lasche kann danach wieder geschlossen werden. Das Beschichtungsmittel mit antiadhäsiven Eigenschaften auf der Packung ermöglicht leichtes Öffnen und Verschließen. Denkbare Anwendungsgebiete sind Beauty, Pharma, Licht empfindliche Produkte und neue Produkte, sowie Marketing und Produktschutz.

Das Beschichtungsmittel mit antiadhäsiven Eigenschaften kann auch zur Herstellung einer Verpackung mit einer Ausschüttöffnung aufgebracht werden. Rieselfähige Produkte, etwa Lebensmittel, wie Reis, haben häufig eine Verpackung mit einer Ausschüttöffnung. Diese ist konstruktiv oft aufwändig, denn ein Verschluss erfolgt oft durch einen Mechanismus der Faltschachtel. Bevorzugt ist die Klebeschicht auf einer Lasche, etwa einer Kartonlasche angebracht, und das Beschichtungsmittel mit antiadhäsiven Eigenschaften ist auf einer Fläche der Faltschachtel angebracht, auf der die Kartonlasche immer wieder fixiert werden kann.

Das Beschichtungsmittel mit antiadhäsiven Eigenschaften kann auch zur Herstellung von Produktverpackungen aufgetragen werden, die aufgespendete Informationsträger, beispielsweise auf aufgespendeten Blättern gedruckte Rezepte aufweisen. Das Rezept kann durch das Beschichtungsmittel mit antiadhäsiven Eigenschaften leicht abgelöst werden, kann aber auch leicht wieder festgeklebt werden. Ein herumflattern von aufgespendeten Produkten wird vermieden, was beispielsweise in den Bereichen Marketing und Produktwerbung vorteilhaft ist.

Das Beschichtungsmittel mit antiadhäsiven Eigenschaften kann auch zur Herstellung eines Etiketts für Logistik aufgetragen werden. Es kann hier eine Etikettlösung, wie oben in Zusammenhang mit Pharmaprodukten beschrieben, realisiert werden. Denkbare Einsatzgebiete sind der Kurierdienst, der nicht so hoch automatisiert ist, wie beispielsweise DHL usw. die über EAN-Codes arbeiten.

Das Beschichtungsmittel mit antiadhäsiven Eigenschaften kann auch zur der Herstellung von so genannten Tissueboxen aufgetragen werden. Tissueboxen, die durch aus dem Stand der Technik bekannte Verfahren hergestellt sind, sind nach dem ersten Öffnen oft nicht wiederverschließbar. Die Tissues, also Tücher, etwa Papiertücher, können daher nach dem ersten Öffnen verschmutzen, insbesondere verstauben. Vorzugsweise wird das Beschichtungsmittel mit antiadhäsiven Eigenschaften in Form eines Streifens aufgebracht, derart, dass ein Verschluss realisiert ist, der auf der einen Seite einer Entnahmeöffnung fest verklebt ist und auf der anderen Seite wiederverschließbar ist.

Das Beschichtungsmittel mit antiadhäsiven Eigenschaften kann auch zur Herstellung einer Verpackung für Teebeutel aufgetragen werden. Teebeutel sind in der geschlossenen, aus dem Stand der Technik bekannten Faltschachtel oft so eingepackt, dass sie nicht mit anderen Gerüchen in Kontakt kommen und frisch bleiben. In aus dem Stand der Technik bekannten modernen Teebeutelspendern ist nach dem Öffnen keine Möglichkeit des Wiederverschlusses gegeben. Bevorzugt wird das Beschichtungsmittel mit antiadhäsiven Eigenschaften derart aufgetragen, dass sich ein Verschluss ergibt, der an einer Seite einer Entnahmeöffnung fest verklebt ist und auf der anderen Seite auf dem Beschichtungsmittel mit antiadhäsiven Eigenschaften wiederverschließbar ist. Die derartige Verpackung ist einfach zu handhaben.

Das Beschichtungsmittel mit antiadhäsiven Eigenschaften kann auch zur Herstellung einer Pralinenverpackung aufgetragen werden. In Pralinenverpackungen, die durch aus dem Stand der Technik bekannte Verfahren hergestellt sind, sind häufig Folien oder Pergament eingebracht, zum Produktschutz und zur Frischeversiegelung. Die Folien sind nach dem Öffnen meist unbrauchbar oder im Weg. Bevorzugt wird das Beschichtungsmittel mit antiadhäsiven Eigenschaften derart einseitig aufgetragen, dass sich ein Wiederverschluss ergibt.

Bevorzugt handelt es sich bei dem Verfahren um ein Verfahren zur Herstellung eines Klebeprodukts, das Zonen unterschiedlicher Klebekraft aufweist.

Bevorzugt besteht die erfindungsgemäße Lösung darin, dass ein Beschichtungsmittel mit antiadhäsiven Eigenschaften, bevorzugt ein UV - härtender Lack mit einem hohen Siliconanteil (»Antiadhesivlack«) oder UV - härtendes Silicon mit einer Auftragsvorrichtung auf eine Substratbahn partiell aufgetragen wird. Dadurch können Bereich mit adhäsiver und dehäsiver Wirkung geschaffen werden. Diese sind dadurch definiert, dass nach dem Kontakt mit einem haftklebrigen Klebstoff dieser an adhäsiven Bereichen dauerhaft anhaftet und sich nur schwer ablösen lässt, während in den dehäsiven Bereichen der Haftklebstoff nur leicht anhaftet und sich leicht ablösen lässt. Die dehäsiven Bereiche sind durch die Bereiche des Lack- oder Siliconauftrags definiert, während die adhäsiven Bereiche durch die nicht beschichteten Bereiche gebildet werden.

Beispiel: In einer Maschine wird eine kontinuierlich transportierte Trägerbahn mittels einer Auftragsvorrichtung partiell mit einer Silicon-haltigen Beschichtung versehen. Besteht diese Bahn zum Beispiel aus Papier und wird diese mit einem anderen, mit einem haftklebrigen Klebstoff versehenem Produkt zusammenlaminiert, so kann das Produkt in den dehäsiven Bereichen leicht von der Trägerbahn abgelöst werden, während in den adhäsiven Bereichen dieses fest mit der Trägermaterial verbunden bleibt. In diesen adhäsiven Bereichen kommt es bei einem Papierträger bei einer versuchten Ablösung des laminierten Materials typischerweise zu einem Faserausriss. Das Trägermaterial könnte zum Beispiel ein Etikett sein, auf dem adhäsive und dehäsive Bereiche geschaffen wurden.

Wird dieses Etikett zum Beispiel mittels eines Haftklebers versehenen Booklets (»Faltprodukt«) oder einer zweiten mit einem Haftkleber versehen Bahn zusammengeführt, wobei zwischen den beiden Bahnen ein Booklet (»Faltprodukt«) platziert ist, dann kann nach entsprechender Weiterverarbeitung ein Booklet - Etikett geschaffen werden, das zum Beispiel am Bund dauerhaft mit dem Deckmaterial verbunden ist, während es sich in anderen Bereichen zum Zwecke der Informationsgewinnung leicht ablösen lässt.

Die Begriffe "Trägerlage", Trägermaterial" und "Trägerbahn" werden im Rahmen dieser Druckschrift synonym verwendet.

Erfindungsgemäß wird das Beschichtungsmittel durch mindestens einen Zuführkanal, mindestens eine Düsenanordnung mit mindestens einem mit dem Zuführkanal verbundenen und in eine Austrittsöffnung zum Abgeben von Material mündenden Austrittskanal sowie eine Ventilanordnung zum Unterbrechen des Materialflusses, die einen bewegbaren Ventilkörper sowie einen Ventilsitz aufweist, wobei der Ventilkörper mit dem Ventilsitz derart zusammenwirkt, dass der Materialfluss durch Bewegung des Ventilkörpers in eine Schließstellung unterbrochen und in eine Öffnungsstellung freigegeben wird, aufgetragen. Es wird ein so genannter intermittierender Auftrag vorgenommen, d. h. dass Intervalle, in denen der Ventilkörper in der Öffnungsstellung ist und Material auf das Substrat aufgetragen wird, sich mit Intervallen abwechseln, in denen der Ventilkörper in der Schließstellung ist, so dass der Materialauftrag unterbrochen ist. Durch den intermittierenden Auftrag, gegebenenfalls in Kombination mit einer in den Auftragsschlitz eingefügten Maske wird ein digital ansteuerbares Auftragsmuster generiert. Der Vorteil einer solchen Auftragsvorrichtung liegt unter anderem in den im Vergleich zu den konventionellen Druckverfahren relativ hohen Schichtdicken, die die dehäsive Wirkung fördern. Außerdem kann vollständig auf kostspielige Druckformen verzichtet werden. Die Flexibilität des Anwenders steigt, da dieser in den meisten Fällen ein neues Muster auf Knopfdruck durch die Änderung der Ansteuerung erzielen kann.

Typischerweise werden die Muster an einer Mensch - Maschinenschnittstelle durch die Angabe der geometrischen Lageparameter definiert (z. B. durch Eingabe von Anfangs- und Endkoordinaten bezogen auf einen Triggerpunkt).

Bevorzugt wird die unterschiedliche Anhaftung also auf einfache Weise in einem formlosen, digital ansteuerbaren Auftragsverfahren erzeugt.

Der Siliconlack ist meist eine Mischung von Acrylaten mit einem Anteil von Siliconen. Ein solcher geeigneter radikalisch härtender Lack wird unter der Bezeichnung Antiadhäsivlack 567000 von der Firma Jaennicke & Schneemann angeboten. Reine, UV - härtende Silicone, die für diesen Einsatzzweck geeignet sind, bietet die Firma Evionik unter der Bezeichnung Tego RC 1403 oder Tego RC 1412 an. Die beiden letzten genannten Typen unterscheiden sich durch den Härtungsmechanismus.

Dieser Siliconlack bzw. Siliconbeschichtung kann einen radikalischen oder einem kationischen Reaktionsmechanismus unterliegen. Das Verfahren ist ausdrücklich nicht nur auf Lacke und Zusammensetzungen beschränkt, die Silicone als Trennmittel enthalten. Das Trennmittel können auch andere Stoffe- und Stoffzusammensetzungen sein, die eine Antihaftwirkung erzielen. Beispielhaft kann die Antihaftwirkung auch durch PTFE Zusätze erzielt werden.

Die Härtung der dehäsiven Schichten kann mit einem konventionellen Quecksilbermitteldruckdampfstrahler geschehen oder mit einer UV -LED (»light emitting diode«) Härtungseinrichtung. Bei der UV - LED Härtung müssen die reaktiven Bestandteile (Photoinitiatoren) der Beschichtungszusammensetzung auf das annähernd monochromatische Licht der UV-LED's abgestimmt sein.

Beispielhaftes Erzeugen eines mehrlagigen Produktes in einem durchgehenden, unterbrechungslosen Produktionsprozess, gekennzeichnet durch folgende Arbeitsschritte:
1. Zuführen einer Trägerbahn, zum Beispiel eine Papierbahn, zu der erfindungsgemäßen Auftragsvorrichtung
2. Partielles Auftragen eine Antihaftschicht mit dehäsiven Eigenschaften auf die Trägerbahn, um Zonen mit einer geringeren Anhaftung zu schaffen
3. Härtung der Antihaftschicht mit einer UV - Härtungsanlage
4. Vollflächiges Beschichten der Trägerbahn mit einem Haftklebstoff
5. Fügen einer zweiten Bahn, eines Produktes auf die Trägerbahn, wobei die zweite Bahn oder das Produkt an Stellen mit aufgetragener dehäsiven Schicht nur leicht anhaftend mit der Trägerbahn verbunden wird, während diese an den anderen Stellen stark haftend verbunden sind.

Das Ziel ist es bevorzugt also, durch den Auftrag des Beschichtungsmittels mit antiadhäsiven Eigenschaften - bevorzugt UV-Lack - definierte Bereiche des zu klebenden Produktes so zu beeinflussen, dass eine unterschiedliche Haftung der nachfolgend aufgetragenen Klebeschicht - bevorzugt des Heißleims - erfolgt.

Alternativ kann der Haftkleber auch auf die zweite Bahn oder das Produkt aufgetragen sein. Daraus ergeben sich folgende Arbeitsschritte:
1. Zuführen einer Trägerbahn, zum Beispiel eine Papierbahn, zu der erfindungsgemäßen Auftragsvorrichtung
2. Partielles Auftragen eine Antihaftschicht mit dehäsiven Eigenschaften auf die Trägerbahn, um Zonen mit einer geringeren Anhaftung zu schaffen
3. Härtung der Antihaftschicht mit einer UV - Härtungsanlage
4. Fügen einer zweiten Bahn, eines Produktes, wobei diese Bahn oder das Produkt auf der gegen die Trägerbahn gerichtete Seite eine Haftkleberbeschichtung aufweist, auf die Trägerbahn, wobei die zweite Bahn oder das Produkt an Stellen mit aufgetragener dehäsiven Schicht nur leicht anhaftend mit der Trägerbahn verbunden wird, während diese an den anderen Stellen stark haftend verbunden sind.

Die UV - Härtung bietet den Vorteil, dass die Schicht nach dem Passieren durch die UV - Härtungsanlage eine ausreichende Härte aufweist, dass diese im Anschluss mit einem Haftklebstoff beschichtet werden kann bzw. mit einem haftklebrige Produkt in Verbindung gebracht werden kann. Hierdurch ergibt sich die Möglichkeit ein Produkte »Inline«, ohne Produktionsunterbrechung zu fertigen. Ferner ist eine kontinuierliche Arbeitsweise möglich, die erheblich produktiver ist als die heute übliche intermittierende Arbeitsweise.

## Patentansprüche

1. Verfahren zur Herstellung eines mehrlagigen Klebeprodukts mit einer Klebeschicht,
wobei ein Beschichtungsmittel mit antiadhäsiven Eigenschaften durch mindestens einen Zuführkanal, mindestens eine Düsenanordnung mit mindestens einem mit dem Zuführkanal verbundenen und in eine Austrittsöffnung zum Abgeben von Material mündenden Austrittskanal sowie eine Ventilanordnung zum Unterbrechen des Materialflusses, die einen bewegbaren Ventilkörper sowie einen Ventilsitz aufweist, wobei der Ventilkörper mit dem Ventilsitz derart zusammenwirkt, dass der Materialfluss durch Bewegung des Ventilkörpers in eine Schließstellung unterbrochen und in eine Öffnungsstellung freigegeben wird, aufgetragen wird, wobei sich die Düsenanordnung in unmittelbarer Nähe zu oder in Kontakt mit einem Substrat befindet, **dadurch gekennzeichnet, dass** zur Generierung eines digital ansteuerbaren Auftragsmusters ein intermittierender Auftrag vorgenommen wird, bei dem Intervalle, in denen der Ventilkörper in der Öffnungsstellung ist und Material auf das Substrat aufgetragen wird, sich mit Intervallen abwechseln, in denen der Ventilkörper in der Schliessstellung ist, so dass der Materialauftrag unterbrochen ist.

2. Verfahren nach Anspruch 1, **gekennzeichnet dadurch, dass** das Beschichtungsmittel mit antiadhäsiven Eigenschaften auf einem Substrat aufgetragen wird, welches sich, ohne beschädigt zu werden, nicht durch Walzenspalte transportieren lässt.

3. Verfahren nach Anspruch 1 oder 2, **gekennzeichnet dadurch, dass** das Beschichtungsmittel mit antiadhäsiven Eigenschaften auf einer Fläche aufgetragen wird, die keine endgültige spätere bestimmungsgemäße Klebefläche ist.

4. Verfahren nach einem der Ansprüche 1 bis 3, **gekennzeichnet dadurch, dass** das Beschichtungsmittel mit antiadhäsiven Eigenschaften auf einen Briefumschlag aufgetragen wird.

5. Verfahren nach einem der Ansprüche 1 bis 3, **gekennzeichnet dadurch, dass** das Beschichtungsmittel mit antiadhäsiven Eigenschaften auf ein pharmazeutisches Produkt aufgetragen wird.

6. Verfahren nach einem der Ansprüche 1 bis 5, zur Herstellung eines mehrlagigen Klebeprodukts bestehend aus einer Trägerlage und mindestens einer weiteren Lage, **gekennzeichnet dadurch, dass** die Lagen miteinander mittels eines einheitlichen Klebstoffs verbunden sind, der partiell oder vollflächig auf mindestens einer der Lagen aufgetragen wurde oder wird,
wobei die Klebkraft (»Haftkraft«) zwischen den Lagen im Bereich des Klebstoffauftrags partiell variiert,
wobei die Variation der Haftkraft dadurch erzielt wird, indem auf eine oder beide Lagen partiell ein durch UV - Strahlen härtbares Beschichtungsmittel mit antiadhäsiven Eigenschaften aufgetragen wird, und nach dem Auftrag des antiadhäsiven Beschichtungsmittels ein Härtungsschritt mittels einer UV - Härtungsanlage (»UV - Trockner«) zum Zwecke der Härtung des Beschichtungsmittels ausgeführt wird,
wobei das Beschichtungsmittel durch mindestens einen Zuführkanal und mindestens eine Düsenanordnung mit mindestens einem mit dem Zuführkanal verbundenen und in eine Austrittsöffnung zum Abgeben von Material mündenden Austrittskanal sowie eine Ventilanordnung, die einen bewegbaren Ventilkörper sowie einen Ventilsitz aufweist,
wobei der Ventilkörper mit dem Ventilsitz derart zusammenwirkt, dass der Materialfluss durch Bewegung des Ventilkörpers in eine Schließstellung unterbrochen und in eine Öffnungsstellung freigegeben wird, aufgetragen wird.

7. Verfahren nach Anspruch 6, **gekennzeichnet dadurch, dass** nach dem Härtungsschritt des antiadhäsiven Beschichtungsmittels ein über die partielle Beschichtung des antiadhäsiven Beschichtungsmittels hinausgehende Beschichtung des Trägermaterials mit einem Klebstoff mit haftklebrigen Eigenschaften erfolgt.

8. Verfahren nach Anspruch 6, **gekennzeichnet dadurch, dass** nach dem Härtungsschritt des antiadhäsiven Beschichtungsmittels zumindest diese Flächen mit einem Haftkleber beschichteten Produkt, zum Beispiel einem Faltprodukt oder einem Etikett, verbunden werden, so dass das Produkt mit dem Trägermaterial in den Bereichen der antiadhäsiven Beschichtung sich von dem Trägermaterial leicht ablösen lässt, während es in den nicht beschichteten Bereichen mit dem Trägermaterial fest verbunden bleibt.

9. Verfahren nach einem der Ansprüche 6 bis 8, **gekennzeichnet dadurch, dass** die Beschichtung des antiadhäsiven Beschichtungsmittels, die UV Härtung und die Beschichtung mit einem haftklebrigen Klebstoff bzw. die Lamination eines haftklebrig beschichteten Produktes in einem kontinuierlichen Arbeitsprozess ohne Produktionsunterbrechung erfolgt.

## Claims

1. Procedure for the manufacture of a multilayer adhesive product with one adhesive layer, whereby a coating agent with anti-adhesive properties is applied through at least one inlet channel, at least one nozzle arrangement with at least one outlet channel connected to the inlet channel, opening into an outlet aperture for dispensing material, as well as a valve arrangement for interrupting the material flow, which has a movable valve body as well as a valve seat, whereby the valve body interacts with the valve seat in such a way that the material flow is interrupted by a movement of the valve body into a closed position and is released by a movement into an open position, whereby the nozzle arrangement is located in the immediate proximity of, or in contact with, a substrate, **characterized in that** to generate a digitally controlled application pattern, an intermittent application is carried out in which intervals in which the valve body is in the open position and material is applied to the substrate alternate with intervals in which the valve body is in the closed position, so that the material application is interrupted.

2. Procedure in accordance with Claim 1, **characterized in that** the coating agent with anti-adhesive properties is applied to a substrate which cannot be transported through roller gaps without being damaged.

3. Procedure in accordance with Claim 1 or 2, **characterized in that** the coating agent with anti-adhesive properties is applied to a surface that is not a final subsequently intended adhesive surface.

4. Procedure in accordance with one of the Claims 1 to 3, **characterized in that** the coating agent with anti-adhesive properties is applied to an envelope.

5. Procedure in accordance with one of the Claims 1 to 3, **characterized in that** the coating agent with anti-adhesive properties is applied to a pharmaceutical product.

6. Procedure in accordance with one of the Claims 1 to 5 for the production of a multilayer adhesive product consisting of a carrier layer and at least one further layer, **characterized in that** the layers are connected to each other by means of a uniform adhesive which was or is applied to a part-surface or to the full surface of at least one of the layers,
whereby the adhesive force ("bonding strength") between the layers varies partially in the region of the adhesive application,
whereby the variation in the bonding strength is achieved through a UV-curable coating agent with anti-adhesive properties being partially applied to one or both layers, and after the application of the anti-adhesive coating agents through a curing process being carried out by means of a UV curing system ("UV dryer") for purposes of curing the coating agent,
whereby the coating agent is applied through at least one inlet channel and at least one nozzle arrangement with at least one outlet channel connected to the inlet channel and opening into an outlet aperture for dispensing material, as well as a valve arrangement which has a movable valve body as well as a valve seat,
whereby the valve body interacts with the valve seat in such a way that the material flow is interrupted by a movement of the valve body into a closed position and is released by a movement into an open position.

7. Procedure in accordance with Claim 6, **characterized in that** a coating of the carrier material going beyond the partial coating of the anti-adhesive coating agent is effected with an adhesive substance with bonding properties after the curing stage of the anti-adhesive coating agent.

8. Procedure in accordance with Claim 6, **characterized in that** after the curing stage of the anti-adhesive coating agent at least these surfaces are bonded to a product coated with adhesive, for example a folded product or a label, so that the product with the carrier material can easily be detached from the carrier material in the areas of the anti-adhesive coating, while it remains firmly attached to the carrier material in the uncoated areas.

9. Procedure in accordance with one of the Claims 6 to 8, **characterized in that** the coating with the anti-adhesive coating agent, the UV curing and the coating with an adhesive bonding substance or the lamination of an adhesively coated product are effected in one continuous working process without any interruption of production.

## Revendications

1. Procédé permettant de fabriquer un produit adhésif multicouches avec une couche adhésive,
un moyen de revêtement à propriétés antiadhésives étant appliqué à travers au moins un conduit d'alimentation, au moins un agencement de buse avec au moins un conduit de sortie raccordé au conduit d'alimentation et débouchant dans une ouverture de sortie pour la distribution de la matière ainsi qu'un agencement de clapet permettant d'interrompre l'écoulement de matière, qui présente un corps de clapet mobile ainsi qu'un siège de clapet, le corps de clapet coopérant avec le siège de clapet de telle sorte que l'écoulement de matière est interrompu par le déplacement du corps de clapet dans une position de fermeture et libéré dans une position d'ouverture, l'agencement de buse se trouvant à proximité immédiate ou en contact avec le substrat, **caractérisé en ce que**, pour générer un modèle d'application à commande numérique, une application intermittente est exécutée, au cours de laquelle des intervalles au cours desquels le corps de clapet est dans la position d'ouverture et la matière est appliquée sur le substrat, sont remplacés par des intervalles, au cours desquels le corps de clapet est dans la position de fermeture, de sorte que l'application de matière est interrompue.

2. Procédé selon la revendication 1, **caractérisé en ce que** le moyen de revêtement à propriétés antiadhésives est appliqué sur un substrat qui ne peut être transporté sans être endommagé à travers l'espace entre les rouleaux.

3. Procédé selon la revendication 1 ou 2, **caractérisé en ce que** le moyen de revêtement à propriétés antiadhésives est appliqué sur une surface qui n'est pas une surface adhésive conforme à l'utilisation ultérieure définitive.

4. Procédé selon l'une des revendications 1 à 3, **caractérisé en ce que** le moyen de revêtement à propriétés antiadhésives est appliqué sur une enveloppe.

5. Procédé selon l'une des revendications 1 à 3, **caractérisé en ce que** le moyen de revêtement à propriétés antiadhésives est appliqué sur un produit pharmaceutique.

6. Procédé selon l'une des revendications 1 à 5, permettant de fabriquer un produit adhésif multicouches composé d'une couche de support et d'au moins une autre couche, **caractérisé en ce que** les couches sont liées les unes aux autres au moyen d'un adhésif uniforme, qui a été ou est appliqué sur une partie ou toute la surface d'au moins une des couches,
la force d'adhérence (« force adhésive ») variant partiellement entre les couches dans la zone de l'application de l'adhésif,
la variation de la force adhésive étant obtenue en appliquant partiellement un moyen de revêtement à propriétés antiadhésives durcissable aux rayons UV sur une ou deux couches, et en exécutant, après l'application du moyen de revêtement antiadhésif, une étape de durcissement au moyen d'une installation de durcissement (« sécheur UV ») en vue du durcissement du moyen de revêtement,
le moyen de revêtement étant appliqué à travers au moins un conduit d'alimentation et au moins un agencement de buse avec au moins un conduit de sortie raccordé au conduit d'alimentation et débouchant dans une ouverture de sortie pour la distribution de la matière ainsi qu'un agencement de clapet, qui présente un corps de clapet mobile ainsi qu'un siège de clapet,
le corps de clapet coopérant avec le siège de clapet de telle sorte que l'écoulement de matière est interrompu par le déplacement du corps de clapet dans une position de fermeture et libéré dans une position d'ouverture.

7. Procédé selon la revendication 6, **caractérisé en ce que**, après l'étape de durcissement du moyen de revêtement antiadhésif, un revêtement de la matière support avec un adhésif à propriétés autoadhésives est réalisé au-dessus du revêtement partiel du moyen de revêtement anti-adhésif.

8. Procédé selon la revendication 6, **caractérisé en ce que**, après l'étape de durcissement du moyen de revêtement antiadhésif, au moins ces surfaces sont reliées à un produit revêtu d'un adhésif de contact, par exemple un produit pliant ou une étiquette, de telle sorte que le produit avec la matière support dans les zones du revêtement antiadhésif peut se décoller facilement de la matière support, tandis qu'il reste fermement relié à la matière support dans les zones non revêtues.

9. Procédé selon l'une des revendications 6 à 8, **caractérisé en ce que** le revêtement du moyen de revêtement antiadhésif, le durcissement aux rayons UV et le revêtement avec un adhésif de contact et le laminage d'un produit revêtu d'un adhésif de contact interviennent au cours d'un processus de travail continu sans interruption de production.
